# EUROPEAN PATENT SPECIFICATION

(11) **EP 2 431 484 B1**
(45) Date of publication and mention of the grant of the patent: **04.04.2018**
(21) Application number: 10780698.6
(22) Date of filing: 28.05.2010
(51) Int. Cl.: C21B 5/00, C21B 5/06

(54) **BLAST FURNACE OPERATION METHOD**
BETRIEBSVERFAHREN FÜR EINEN VERBRENNUNGSOFEN
PROCÉDÉ DE FONCTIONNEMENT D'UN HAUT-FOURNEAU

(30) Priority: 29.05.2009 JP 2009130282; 26.05.2010 JP 2010120398
(43) Date of publication of application: 21.03.2012
(73) Proprietor: JFE Steel Corporation, Tokyo, 100-0011 (JP)
(72) Inventor: ASANUMA, Minoru, Tokyo 100-0011 (JP); NOUCHI, Taihei, Tokyo 100-0011 (JP); SATO, Takeshi, Tokyo 100-0011 (JP); MURAO, Akinori, Tokyo 100-0011 (JP); TAKEUCHI, Naoyuki, Tokyo 100-0011 (JP)
(74) Representative: Hoffmann Eitle
(86) International application number: PCT/JP2010/059572
(87) International publication number: WO 2010/137748

(56) References cited:
- EP-A1- 0 042 147
- JP-A- H0 913 110
- JP-A- 60 033 305
- JP-A- 2005 105 046
- JP-A- 2008 106 320
- JP-A- 2008 111 176
- JP-A- 2008 214 735
- US-A- 4 432 790

## Description

### Technical Field

The present invention relates to a method for operating a blast furnace using carbon iron composite (ferrocoke), produced by briquetting and carbonizing a mixture of coal and iron ore, as blast furnace feed for the purpose of stably performing a low-reducing agent ratio operation.

### Background Art

In recent years, global warming due to increasing carbon dioxide emissions has become an issue. The reduction of CO₂ emissions is an important issue for the steel industry. Therefore, among recent blast furnace operations, a low-reducing agent ratio (low-RAR) operation is strongly recommended. RAR is an abbreviation for Reducing agent ratio and refers to the sum of the amount of an injected reducing agent and the amount of coal charged from a furnace top to produce one ton of pig iron. Blast furnaces principally use coke and pulverized coal as reducing agents. In order to achieve low reducing agent ratio, that is, in order to suppress carbon dioxide emissions, it is effective that coke is replaced with a reducing agent, such as waste plastic, LNG (Liquefied Natural Gas), or fuel oil, having high hydrogen content. As for a technique for using a reducing agent with high hydrogen content in a blast furnace, for example, Patent document 1, Japanese Unexamined Patent Application Publication No. 3-240906, discloses a low- carbon dioxide emission iron-making process in which LNG is injected into a blast furnace through a tuyere and thereby the amount of carbon dioxide emitted in a pig iron-making step is decreased.

In another process, iron ore is not used as an iron source and iron scraps, which have been reduced, are used as blast furnace feed. In consideration of blast furnace operations, there are limitations on the dimensions (size) of charged iron scraps and the concentration of an impurity, such as zinc or copper, therein and therefore the iron scraps need to be pretreated.

Patent document 2, Japanese Unexamined Patent Application Publication No. 2006-28594, discloses a method using carbon iron composite produced by carbonizing briquettes formed from a mixture of coal and iron ore. Carbon iron composite is highly reactive and therefore promotes the reduction of sintered ore. Carbon iron composite contains partially reduced iron ore and therefore can decrease the temperature of a thermal reserve zone of a blast furnace and the reducing agent ratio thereof.

However, a reduction in RAR causes a reduction in blast volume in principle. This leads to fears that the increase in temperature of burden charged in a shaft upper portion, that is, a furnace top, is delayed; reduction does not therefore proceed smoothly; the walling of zinc compounds and the like is promoted; and furnace malfunctions such as a change in draft pressure and burden-descending failures are caused. When the temperature of a top gas falls below 100°C, there is a problem in that moisture in a flue gas is condensed.
Examples of a method for controlling the temperature of a top gas in the case of using carbon iron composite include a method in which blast furnace feed is heated and is then charged from a furnace top as disclosed in Patent document 3, Japanese Unexamined Patent Application Publication No. 2008-111145, and a method in which one or more selected from the group consisting of the oxygen enrichment of air supplied through a tuyere, the amount of a reducing agent injected through a tuyere, and the nitrogen enrichment of air supplied through a tuyere are controlled as disclosed in Patent document 4, Japanese Unexamined Patent Application Publication No. 2008-111172.

Reference is also made to EP 0 042 147 A1, which discloses a multi-purpose zone controlled blast furnace and method of producing hot metal, gases and slags.

In an ordinary blast furnace operation, in order to prevent a problem with the reduction in temperature of a top gas, the temperature of the top gas is maintained at 100°C or higher, preferably 120°C or higher. However, in the case of aiming at a low-reducing agent ratio operation by the reduction in temperature of a thermal reserve zone using carbon iron composite as blast furnace feed as described above, the temperature of a top gas is greatly decreased and therefore it is difficult to avoid various furnace malfunctions, particularly a failure to heat a furnace top portion, by varying operating conditions within an ordinary operation range. Therefore, the conventional techniques have problems below.

### (Patent document 1)

The amount of hydrogen charged through a tuyere is increased and an increase in the percentage of hydrogen reduction in the reduction of iron oxide decreases the temperature of a shaft portion. This suggests the possibility of an increase in the residence time of charged materials such as iron ore and sintered ore in a low- temperature zone. An increase in a low-temperature zone of the shaft portion means an increase in the reduction degradation zone of sintered ore. The degradation of iron ore and the like due to reduction impairs gas permeability and the descending behavior of charged materials.

### (Patent document 3)

Disclosed is a method in which blast furnace feed is heated in a feed bunker placed on a furnace top portion of a blast furnace, in a blast furnace operation using carbon iron composite as a portion of blast furnace feed. However, in a blast furnace capable of producing, for example, 10000 t of molten pig iron per day, an enormous amount of heat is necessary to preheat about 15000 t of iron ore and about 3200 t of coke to a temperature of 100°C to 200°C. This is believed to be not economically efficient.

### (Patent document 4)

Disclosed is a method in which one or more selected from the group consisting of the oxygen enrichment of air supplied through a tuyere, the amount of a reducing agent injected through a tuyere, and the nitrogen enrichment of air supplied through a tuyere are controlled, in a blast furnace operation using carbon iron composite as a portion of blast furnace feed. In this method, it is necessary to investigate optimum conditions in detail for each blast furnace in advance and there are probably limitations on the oxygen enrichment and nitrogen enrichment of supplied air and the injection rate of the reducing agent because of the capacity of the blast furnace. This method is very excellent and however, probably requires massive investments in facilities such as air blowers, oxygen separators, reducing agent dryers, pulverizers, and conveyers.

The present invention has been made to solve the above problem and has an object to provide a method for operating a blast furnace, the method being capable of avoiding, particularly, a failure to heat a furnace top portion at low cost even in the case of performing a low-RAR operation (the reduction of carbon dioxide emissions).

### Summary

To accomplish the above object, the present invention provides a method for operating a blast furnace defined by appended independent claim 1. The dependent claims are directed to optional features and preferred embodiments. The method includes using carbon iron composite as a charging material of the blast furnace; injecting a shaft gas into the blast furnace from a shaft portion of the blast furnace; and controlling at least one selected from the group consisting of the injection temperature, injection rate, and vertical injection position of the shaft gas depending on the top gas temperature of the blast furnace. The shaft gas refers to gas injected into a. blast furnace from a shaft portion of the blast furnace.

The charging material includes iron ore, coke, and the carbon iron composite and the carbon iron composite is preferably 2% to 60% by mass of the total coke amount that is the sum of coke and the carbon iron composite and more preferably 10% to 35% by mass.

The control of at least one is preferably that the top gas temperature is maintained at higher than 80°C by controlling at least one selected from the group consisting of injection temperature, injection rate, and vertical injection position of the gas injected from the shaft portion of the blast furnace.

The control of at least one is preferably that the vertical injection position of the shaft gas is controlled such that the vertical injection position of the shaft gas is adjusted to a position at which the inside temperature of the blast furnace is lower than the temperature of the shaft gas.

The injection of the gas is preferably that the shaft gas is injected into' the blast furnace through a shaft gas injection pipe attached to the shaft portion at a tip gas velocity of 6 m/s to 100 m/s, more preferably 10 m/s to 72 m/s, and most preferably 15 m/s to 72 m/s.

The injection temperature of the shaft gas is preferably 200°C to 1000°C.

The injection rate of the shaft gas is preferably 20 Nm³/t to 200 Nm³/t.

The injection of the shaft gas is preferably that the shaft gas is injected into the blast furnace from the shaft portion horizontally or at an angle of up to 45° downward.
The angle is preferably 15° to 45° downward.

The injection of the gas is preferably that the gas is injected into the blast furnace at a position 7 m or more below the surface of the charged material.

The injection of the shaft gas is preferably that the shaft gas is injected into the blast furnace through four or more ports circumferentially arranged around the blast furnace.

The shaft gas is preferably a combustion flue gas free of O₂.

The shaft gas is preferably a combustion flue gas containing one or both of CO and CO₂.

The shaft gas is preferably a blast furnace gas.

### Advantageous Effects of Invention

According to a method for operating a blast furnace according to the present invention, one, two, or three of the injection temperature, injection rate, and vertical injection position of a shaft gas injected from a shaft portion are controlled in combination depending on the temperature of a top gas during the operation of the blast furnace using carbon iron composite as a portion of a charged material, whereby the decrease in temperature of the top gas is suppressed. Therefore, a failure to heat a furnace top portion can be avoided at low cost without significant capital investment even in the case of performing a low-RAR operation (the reduction of carbon dioxide emissions).

The carbon iron composite used as a portion of the charged material suppresses the decrease in temperature of the top gas depending on the temperature of the top gas during the operation of the blast furnace at 2% by mass or more of the total coke amount at which the effect of reducing the temperature of a thermal reserve zone is developed or 60% by mass or less for the purpose of avoiding the deterioration of gas permeability due to the excessive amount of the carbon iron composite present on a hearth portion. Therefore, the blast furnace can be stably operated using the carbon iron composite.

The temperature of the top gas can be maintained at higher than 80°C. Therefore, the following disadvantages do not arise: the reduction of dust emissions, the fluctuation of gas permeability, and the inhibition of the stable operation of the blast furnace.

The shaft gas is injected from the shaft portion at a gas velocity of 6 m/s to 100 m/s at the tip of the shaft gas injection pipe; hence, a mixed layer containing ore and coke is unlikely to be formed on an injection site and therefore the operation of the blast furnace is not adversely affected.

The shaft gas is injected at a temperature of 200°C to 1000°C; hence, the charged material can be efficiently heated and the top gas temperature of a furnace top portion can be maintained at higher than 80°C.

The charged material is heated in such a manner that the injection rate of the shaft gas is adjusted to 20 Nm³/t to 200 Nm³/t; hence, the temperature of the charged material can be efficiently increased.

The vertical injection position of the shaft gas is adjusted to a position at which the inside temperature of the blast furnace is lower than the temperature of the shaft gas depending on the temperature of the shaft gas injected from the shaft portion. Therefore, the inside of the blast furnace is not cooled by the shaft gas.

The shaft gas is injected horizontally or at an angle of 0° to 45° downward; hence, a portion for injecting the shaft gas is not blocked.

The shaft gas is injected from the shaft portion at a position 7 m or more below the surface of the charged material in the blast furnace. Therefore, the injected shaft gas is prevented from being blown out and the charged material can be efficiently heated.

The shaft gas is injected through four or more ports circumferentially arranged around the blast furnace; hence, the temperature of the top gas can be uniformly maintained in the circumferential direction of the blast furnace.

The shaft gas is a combustion flue gas free of O₂; hence, the reducing action of the inside of the blast furnace is not inhibited.

The shaft gas is preferably a combustion flue gas containing one or both of CO and CO₂. Therefore, the reducing action of the inside of the blast furnace is not inhibited and various combustion flue gases including blast furnace gases and the sensible heat thereof can be used.

The shaft gas is preferably a blast furnace gas; hence, the atmosphere in the blast furnace can be ensured.

### Brief Description of the Drawings

Fig. 1 is a vertical sectional view of a blast furnace to which a blast furnace-operating method according to an embodiment of the present invention is applied.
Fig. 2 is an illustration of the effect of a shaft gas on the top gas temperature and the burden temperature.
Fig. 3 is an enlarged view of a portion of a shaft gas injection pipe shown in Fig. 1 (θ = 0°).
Fig. 4 is an enlarged view of a portion of the shaft gas injection pipe shown in Fig. 1 (θ > 0°).
Fig. 5 is an enlarged view of a portion of the shaft gas injection pipe shown in Fig. 1 (θ < 0°).
Fig. 6 is a schematic vertical sectional view of a cold model apparatus used in an experiment.
Fig. 7 is an enlarged view of a portion of a shaft gas injection pipe shown in Fig. 6.
Fig. 8 is a graph showing the relationship between the gas velocity at the tip of a shaft gas injection pipe and the average depth of a mixed layer obtained from a cold model experiment.
Fig. 9 is a graph showing the relationship between the injection angle of a shaft gas and the length of a flow of burden obtained from a cold model experiment.
Fig. 10 is a graph showing the relationship between the injection angle of a shaft gas and the gas velocity on the depositional surface of burden obtained from a cold model experiment.

### Embodiments for carrying out the Invention

A method for operating a blast furnace according to an embodiment of the present invention will now be described with reference to the accompanying drawings.

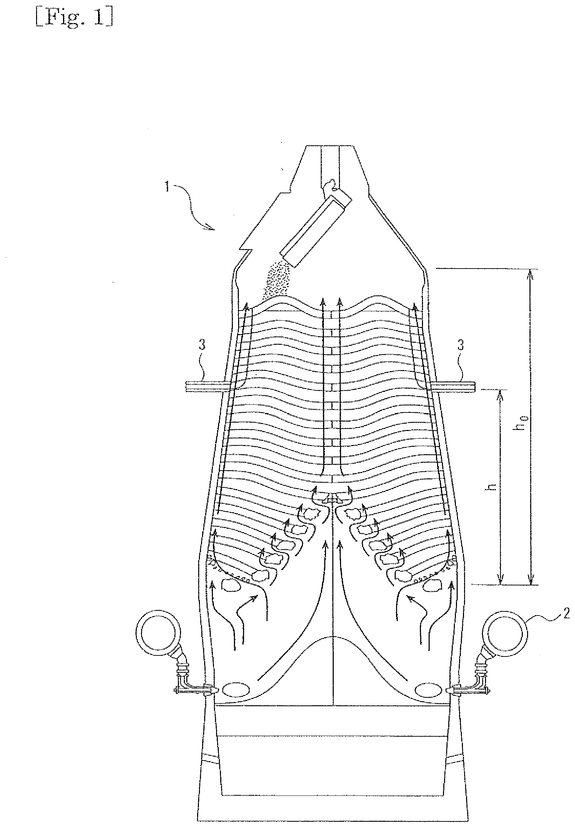

Fig. 1 is an overall view of a blast furnace to which the blast furnace-operating method according to this embodiment is applied. The term "shaft" refers to a portion of the blast furnace that spreads downward from an upper portion of the blast furnace.

In the blast furnace 1, the following operation is performed: an operation in which hot air is blown through tuyeres 2, iron ore is reduced by burning coke charged in the blast furnace and molten pig iron is thereby produced and is then discharged through a tap hole (not shown) located in a hearth portion. Arrows shown in this figure indicate flows of gas.

In this embodiment, carbon iron composite produced by briquetting and carbonizing a mixture of coal and iron ore is used as a portion of a charged material. The term "carbon iron composite" as used herein refers to one produced from a material containing 70% by mass or more of coal and iron ore. Carbon iron composite can increase the gas utilization efficiency in the blast furnace because iron ore is partially reduced and the reactivity of coke can be increased by the catalysis of iron ore. Therefore, the content of iron ore therein is preferably at least 5% and more preferably 10% by mass or more. When the content of iron ore is more than 40% by mass, carbon iron composite has significantly reduced strength. Therefore, the amount of iron ore is preferably 5% to 40% and more preferably 10% to 40% by mass of the sum of the amount of iron ore and the amount of coal. The material prepared as described above is formed into briquettes with a briquetting machine. The briquettes are carbonized in a shaft heat-treating furnace or the like by a direct heating process using a hot blast, whereby carbon iron composite is produced.

Since the briquettes are heated to a temperature of 900°C or higher in the shaft furnace, iron ore in contact with coal is reduced. Therefore, the reduction degree of iron ore in carbon iron composite is more than 60%. When the rolling reduction of iron in iron ore is 60% or more, preferably 70% or more, carbon iron composite has high coke drum strength and crushing strength due to the blending of iron ore and therefore carbon iron composite can be prevented from being degraded in the blast furnace, which is preferred.

Since such carbon iron composite can increase the gas utilization efficiency in the blast furnace because iron ore is partially reduced and the reactivity of coke can be increased by the catalysis of iron ore, the use of carbon iron composite can reduce the reducing agent ratio of the blast furnace.

The amount of carbon iron composite used to control the temperature of a top gas by the injection of a shaft gas preferably ranges from 2% by mass of the total amount of coke at which the effect of decreasing the temperature of a thermal reserve zone is developed and the temperature of the top gas begins to decrease to 60% by mass of the total amount of coke at which a large amount of carbon iron composite incapable of being gasified in the blast furnace is present on a lower portion of the blast furnace to impair the gas permeability of the blast furnace. The amount of carbon iron composite is more preferably 10% to 35% by mass of the total amount of coke.

A blast furnace gas generated in the blast furnace is discharged outside through an uptake located at the top of the blast furnace and is then recovered. The temperature of the top gas is herein defined as the temperature of the blast furnace gas that is measured in the uptake.

Table 1 shows results obtained from the investigation of the change in temperature of the top gas by modeling the heat and mass balance of the blast furnace.

The influence of the temperature of the thermal reserve zone and shaft efficiency on the temperature of the top gas was investigated, with the heat loss and the pulverized coal ratio fixed. In Case 1, in which the shaft efficiency representing gas reduction efficiency is improved by 0.05 by adjusting the distribution of the charged material as compared with that of Base shown in this table, the reducing agent ratio is 18.2 kg/t less than that of Base and the temperature of the top gas is 14.6°C lower than that of Base. In Case 2, in which the temperature of the thermal reserve zone is significantly low as predicted in the case of using carbon iron composite, the reducing agent ratio is 37.0 kg/t less than that of Base and the temperature of the top gas is 85.7°C lower than that of Base. In either case, the temperature of the top gas is low due to the reduction of the reducing agent ratio. Case 2, in which the temperature of the thermal reserve zone is low, is more greatly affected by the decrease in temperature of the top gas. In general, a reduction in reducing agent ratio decreases the temperature of a top gas. In Cases 1 and 2, the decrease in temperature of the top gas due to the reduction of the reducing agent ratio by 1 kg/t is - 0.8 °C/kg/t and -2.32 °C/kg/t, respectively. This shows that the decrease in temperature of the top gas is large in the case of the reduction of the reducing agent ratio due to the decrease in temperature of thermal reserve zone. Thus, in order to decrease the temperature of the thermal reserve zone by the use of carbon iron composite to reduce the reducing agent ratio, the temperature of the top gas needs to be more fully ensured than the usual reduction of the reducing agent ratio. Therefore, in the case of using carbon iron composite in the blast furnace, a blast furnace-operating method in which the control of temperature is performed by the injection of a shaft gas from a shaft portion is more effective in reducing the temperature of the top gas as described herein.

**Table 1**

| | | Base | Case 1 | Case 2 |
|---|---|---|---|---|
| Temperature of thermal reserve zone | °C | 1000.0 | 1000.0 | 850.0 |
| Shaft efficiency | - | 0.90 | 0.95 | 0.90 |
| Coke ratio | kg/t | 363.2 | 345.0 | 326.2 |
| Pulverized coal ratio | kg/t | 142.0 | 142.0 | 142.0 |
| Reducing agent ratio | kg/t | 505.2 | 487.0 | 468.2 |
| Temperature of top gas | °C | 135.7 | 121.1 | 50.0 |
| Reduction in amount of reducing agent ratio | kg/t | - | -18.2 | -37.0 |
| Decrease in temperature of top gas | °C | - | -14.6 | -85.7 |
| Reduction in temperature of top gas per reducing agent ratio | °C/kg/t | - | -0.80 | -2.32 |

In the case of using the top gas as a shaft gas, a portion of a furnace gas in the blast furnace 1, that is, a blast furnace gas, is discharged and another portion thereof is recycled and is injected into the blast furnace 1 through shaft gas injection pipes 3 connected to a shaft portion as a shaft gas. The shaft gas is heated with a heater as required. In the case of using the blast furnace gas as a shaft gas, the blast furnace gas is heated by burning an individual combustion gas in a heater or heated with an external heating unit such as a burner, a heater, or a heat storage medium because the blast furnace gas is effectively used as an energy source in ironworks. The blast furnace gas may be heated by burning itself. The blast furnace gas is most ideal as a shaft gas in the sense that an atmosphere in the blast furnace 1 is maintained. For example, a combustion flue gas such as a coke oven gas obtained from a coke oven can be used as a shaft gas in addition to the blast furnace gas. An important requirement for the shaft gas is not to impair a reducing atmosphere in the blast furnace and an essential requirement therefor is to contain no O₂. If the gas contains O₂, O₂ needs to be removed therefrom in advance of use. The combustion flue gas contains CO and CO₂.

The shaft gas injection pipes 3 for the shaft gas are circumferentially arranged all around the blast furnace 1 at equal intervals such that the shaft gas is injected into the blast furnace at equal intervals. The shaft gas injection pipes 3 are arranged in multiple stages such that the vertical positions thereof can be adjusted.

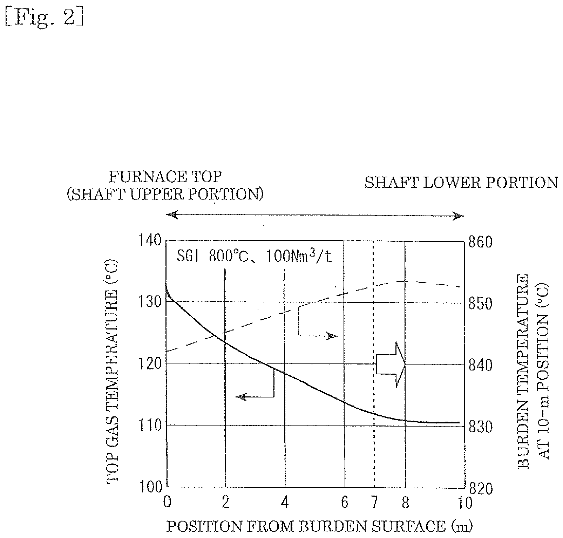

In the present invention, the shaft gas is injected into the blast furnace through four or more ports circumferentially arranged around the blast furnace such that the shaft gas is injected into the blast furnace at equal intervals in the circumferential direction of the blast furnace. Since the shaft gas is injected into the blast furnace through the four or more ports, a temperature distribution uniform in the circumferential direction of the blast furnace can be achieved. The number of ports is preferably six or more. The reason why the shaft gas injection pipes 3 are arranged in multiple stages such that the vertical positions thereof can be adjusted is that the vertical positions of ports for injecting the shaft gas can be varied depending on the temperature of the shaft gas or the temperature of the top of the blast furnace 1. In the present invention, the shaft gas is injected at a position 7 m or more below a feed surface layer for a reason illustrated in Fig. 2. Fig. 2 illustrates the effect of the shaft gas on the temperature of the top gas and the temperature of a solid (charged material) during the injection of the shaft gas and shows the change in temperature of each position apart from the feed surface layer. By the injected shaft gas, the charged material is heated and the temperature of the top gas is increased. The heating of the charged material is substantially finished at the point of time when the injection point of the shaft gas reaches a position 7 m away from the feed surface layer. These results show that the shaft gas needs to be injected at the position 7 m or more below the feed surface layer.

In the case of injecting the shaft gas from the shaft portion during the low-RAR operation of the blast furnace for the purpose of increasing the reduction efficiency of the blast furnace or for the purpose of avoiding a failure to heat a furnace upper portion, when the shaft gas injection pipes are arranged in the middle of the shaft portion, raw materials in the blast furnace flow into the shaft gas injection pipes to block the shaft gas injection pipes and therefore there is a possibility that the stable supply of a preheated gas is prevented. Raw materials used in blast furnaces are known to have an angle of rest of 35° to 45° and the powder pressure at the middle of the shaft portion is known to be about 0.8 kPa to 1.6 kPa. Therefore, the raw materials in the blast furnace flow at the angle of rest of the raw materials and are pushed out by the powder pressure in the blast furnace; hence, it is conceivable that the shaft gas injection pipes will be blocked. If the shaft gas injection pipes are blocked, the shaft gas will blow through the shaft gas injection pipes or will flow backward. Therefore, the inventors have investigated the angle of a shaft gas injection pipe for the purpose of preventing the raw materials from blocking the shaft gas injection pipe.

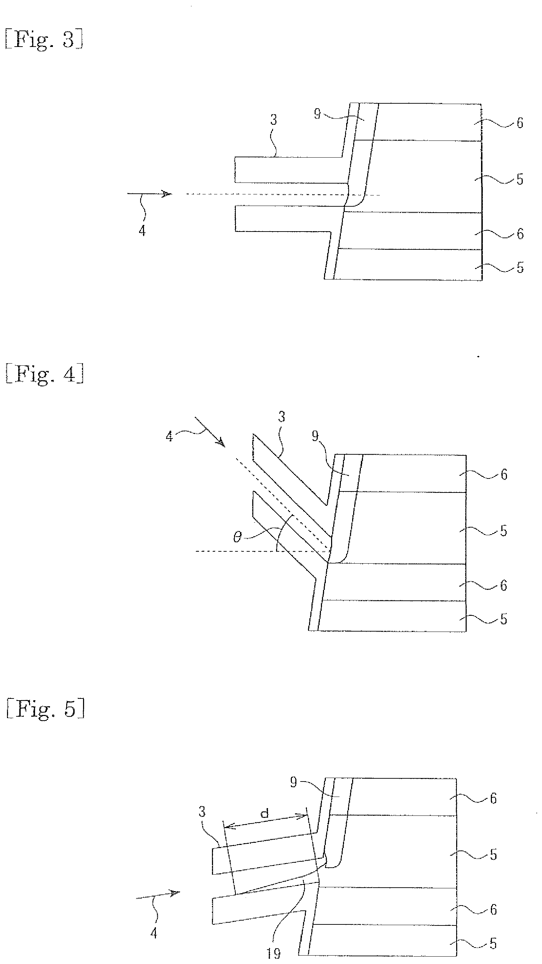

Fig. 3 shows the case where a shaft gas injection pipe 3 is placed horizontally and a shaft gas 4 is injected horizontally, that is, the shaft gas 4 is injected at a tilt angle θ of 0° with respect to the level. In this figure, reference numeral 9 represents the flow of the shaft gas in a furnace. In this case, the shaft gas 4 is injected into a blast furnace 1 through the shaft gas injection pipe 3 and there is a possibility that iron ore (raw material) 5 and coke 6 in the furnace enter the shaft gas injection pipe 3 because of a flowing phenomenon and pushing out due to the powder pressure in the furnace.

Fig. 4 shows the case where a shaft gas injection pipe 3 is placed at a downward angle and a shaft gas 4 injected downward, that is, the shaft gas 4 injected at a tilt angle θ of more than 0° with respect to the level. In this case, iron ore 5 and coke 6 are unlikely to enter the shaft gas injection pipe 3.

Fig. 5 shows the case where a shaft gas injection pipe 3 is placed at an upward angle and a shaft gas 4 injected upward, that is, the shaft gas 4 injected at a tilt angle θ of less than 0° with respect to the level. In this case, iron ore 5 and coke 6 readily enter the shaft gas injection pipe 3 and therefore it is conceivable that the shaft gas injection pipe 3 will be blocked by a flow 19 thereof.

Furthermore, the inventors have performed model experiments to investigate conditions for preventing shaft gas injection pipes from being blocked. Therefore, the inventors have prepared a 1/21-size cold model of a blast furnace and have investigated the gas velocity at which a raceway is formed at the tip of an injection pipe by injecting gas from a shaft portion. It is important that a raw material-packed bed is not fluidized or agitated by an injection gas (shaft gas) when gas is injected from the shaft portion. The fluidization of the raw material-packed bed is caused because the drag applied to raw materials in a furnace from the injection gas exceeds the inertial force of the descending raw materials (burden descent). Therefore, in order to prevent the fluidization of the raw material-packed bed, conditions for injecting gas at a low flow rate are preferably adjusted such that the drag applied to the raw materials from the shaft gas falls below the inertial force of the descending raw materials.

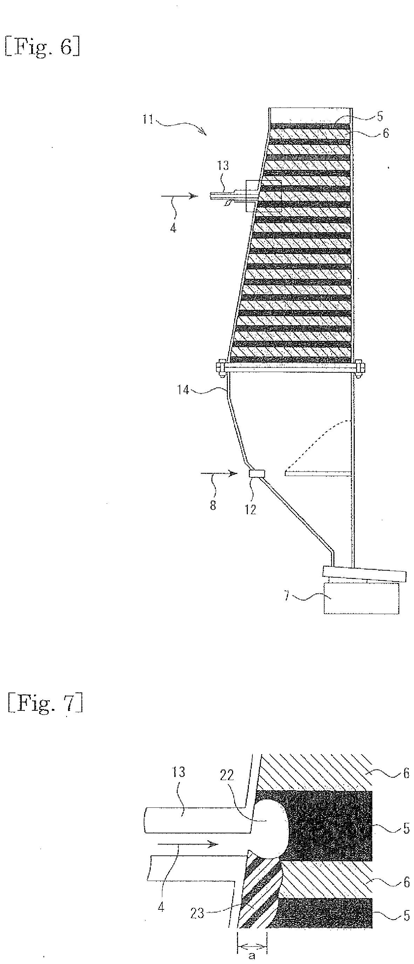

Fig. 6 schematically shows a model apparatus. The model apparatus 11 includes a furnace body 14, a tuyere 12, and a shaft gas injection pipe 13. The furnace body 14 has an inner diameter of 271 mm and a height of 1493 mm and includes a SUS vessel located at an upper position and an acrylic vessel located at a lower position. The shaft gas injection pipe 13 used is a pipe with an inner diameter of 10 mm, which corresponds to 0.035 m² in terms of an actual furnace. Raw materials filled in a furnace are iron ore (sintered ore) 5 and coke 6 used in an actual furnace and are pulverized and classified in accordance with the scale of the model. In order to establish actual burden descent and a blast through a tuyere, the raw materials are cut out of a vibrating feeder 7 placed at a lower position of the furnace body and air 8 is introduced through a tuyere 12 located at the lower end of a bosh. The raw material-cutting speed of the model apparatus 11 and blast conditions are Fr number (Froude number)-fixed conditions like an actual apparatus.

In a model experiment, the injection angle of a shaft gas was set to 0° (the level), the gas velocity at the tip of the shaft gas injection pipe 3 was controlled by varying the injection rate of the shaft gas, and the generation of a mixed layer was observed at the tip of the shaft gas injection pipe 3. A region surrounded by a rectangle in Fig. 6 is shown in Fig. 7 in an enlarged manner. With reference to Fig. 7, reference numeral 22 represents a raceway. A mixed layer 23, formed thereunder, containing coke and ore (sintered ore) was measured for mixed layer depth a.

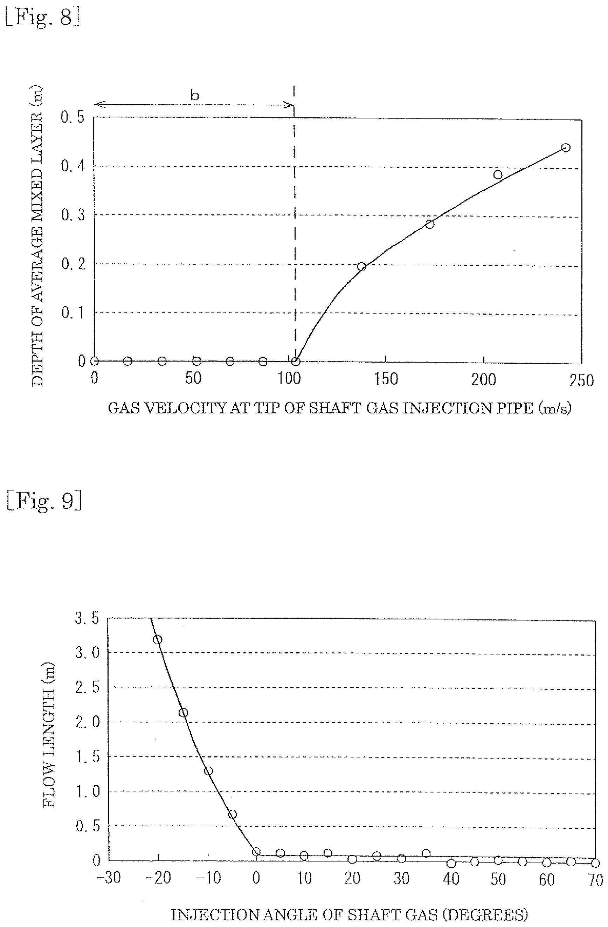

Fig. 8 shows the relationship between the gas velocity at the tip of the shaft gas injection pipe 3 and the average depth of a mixed layer formed in a shaft portion. The average mixed layer depth was defined as the average depth of the mixed layer 23 formed below the tip of the shaft gas injection pipe 3 in the radial direction of the furnace within the range of five charges, supposing that one charge is composed of two layers consisting of a single ore layer and a single coke layer. The gas velocity and the average mixed layer depth were corrected with the inside temperature and pressure of an actual furnace and were converted into values equivalent to those of the actual furnace depending on the scale. As a result of the experiment, the raceway 22 was not generated when the gas velocity at the tip of the shaft gas injection pipe 3 was 100 m/s or less. Furthermore, no mixed layer was formed in Region b (a region representing a gas velocity of about 100 m/s or less) shown in Fig. 8. Therefore, the inventors investigated the injection angle θ of the shaft gas in such a manner that the gas velocity at the tip of the shaft gas injection pipe 3 was fixed to 100 m/s. If a mixed layer is formed, then the mixed layer causes local reduction failures, the turbulence of a furnace gas, and/or the deterioration of gas permeability. Thus, the gas velocity at the tip of the shaft gas injection pipe 3 needs to be 100 m/s or less and also needs to be 6 m/s or less for the purpose of ensuring the injection rate. The gas velocity is 6 m/s to 100 m/s, preferably 10 m/s to 72 m/s, and more preferably 15 m/s to 72 m/s.

In order to investigate the influence of the injection angle of the shaft gas, experiments were performed in such a manner that the tilt angle θ of the injected shaft gas shown in Figs. 3 to 5 was varied between -30° and 70° (the formula θ < 0° represents the upward injection of the shaft gas and the formula θ > 0° represents the downward injection of the shaft gas). Fig. 9 shows the relationship between the injection angle of the shaft gas and the length of a flow of burden. The flow length is the distance d from the tip of the shaft gas injection pipe to the tip of the burden flow in such a situation that the burden flows into the shaft gas injection pipe and is deposited therein as shown in Fig. 5. The flow length was determined by converting the distance d obtained in an experiment into the actual flow length. As shown in Fig. 9, when the injection angle of the shaft gas was within the range of 0° to 70°, the burden hardly flew into the shaft gas injection pipe. However, when the injection angle of the shaft gas was within the range of -20° to 0°, the burden flew into the shaft gas injection pipe. When the injection angle thereof was within the range of -30° to -20°, the shaft gas injection pipe was completely blocked immediately after the start of an experiment.

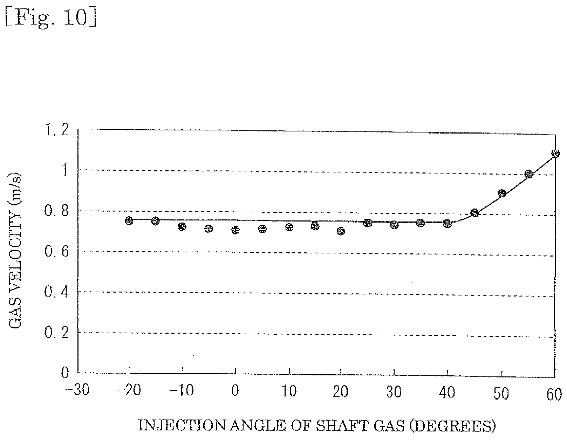

Fig. 10 shows the relationship between the gas velocity on the depositional surface (an upper portion of a shaft gas injection pipe that is close to the wall of a furnace) of the burden used in a model experiment and the injection angle of a shaft gas. Fig. 10 illustrates that the gas velocity in the vicinity of the depositional surface hardly varies when the injection angle of the shaft gas is within the range of -20° to 45° and, however, the gas velocity increases when the injection angle of the shaft gas is 45° or more. This suggests that the distribution of a gas stream is varied by the influence of the injection of the shaft gas and an ambient gas stream is strengthened. In general, the strengthening of an ambient gas stream in a blast furnace leads to an increase in reducing agent ratio due to an increase in heat loss from the wall of the blast furnace. Therefore, an increase in gas velocity in the vicinity of the wall is an undesirable phenomenon.

From the results of the model experiments, the appropriate injection angle of a shaft gas that prevents burden from flowing into a shaft gas injection pipe and that enables the stable supply of the shaft gas to a blast furnace without an increase in heat loss from the wall of the blast furnace is believed to be within the range of 0° to 45° with respect to the level. In consideration of a change in actual operation, the injection angle of the shaft gas is preferably within the range of 15° to 45°.

The injection rate of the shaft gas needs to be at least 20 Nm³ (at standard temperature and pressure)/t (per the amount of feed) for the purpose of heating an ore layer and a coke layer and the upper limit thereof is 200 Nm³ (at standard temperature and pressure)/t (per the amount of feed) in view of heating costs and is preferably 30 to 180 Nm³ (at standard temperature and pressure)/t (per the amount of feed).

When the injection temperature of the shaft gas is lower than 200°C, the difference between the injection temperature of the shaft gas and the temperature of a top gas that is intended to be controlled is small and the effect of heating is insufficient. Therefore, the injection temperature of the shaft gas needs to be 200°C or higher for the purpose of heating the charged material and the upper limit thereof is preferably 1000°C or lower depending on the upper temperature limit of an injection unit and cost.

Since the shaft gas needs to be injected into a region where the temperature of the charged material in the blast furnace is lower than the injection temperature of the shaft gas, the injection position thereof enables the adjustment of the vertical position of each shaft gas injection pipe as described above. When the decrease in temperature of the top gas is slight, the shaft gas is injected through the shaft gas injection pipes which are located close to the furnace top and which are circumferentially arranged all around the blast furnace at equal intervals and the temperature of the top gas is observed. In the case where the temperature of the top gas continues to decrease, the shaft gas is injected through the shaft gas injection pipes which are located below the furnace top and which are circumferentially arranged all around the blast furnace at equal intervals. In this case, the blast furnace is operated in such a manner that the temperature of the shaft gas injected at positions below the furnace top is raised above the temperature of the shaft gas injected from the furnace top in addition to the control of the temperature of the top gas or the strong heating of the charged material. When the decrease in temperature of the top gas is slight, the shaft gas is injected through the shaft gas injection pipes which are located close to the furnace top and which are circumferentially arranged all around the blast furnace at equal intervals and the temperature of the top gas is observed. In the case where the temperature of the top gas continues to decrease, the shaft gas is injected through the shaft gas injection pipes which are located below the furnace top, which are 7 m away from a surface layer of the charged material, and which are circumferentially arranged all around the blast furnace at equal intervals. In this case, the blast furnace is operated in such a manner that the temperature of the shaft gas injected at positions below the furnace top is raised above the temperature of the shaft gas injected from the furnace top in addition to the control of the temperature of the top gas or the strong heating of the charged material.

The inventors have performed a test in such a manner that carbon iron composite is charged into a blast furnace in ordinary operation, the decrease in temperature of a top gas due to a reduction in reducing agent ratio is confirmed, and a shaft gas is injected from a shaft portion of the blast furnace as shown in Fig. 1. In the test, the change in temperature of the top gas was investigated by varying the injection temperature, amount, vertical injection position of the heated shaft gas.

In this embodiment, an operation test was performed using carbon iron composite with an iron-to-coke ratio of 0.4:0.6 on a mass basis in a blast furnace with an inner volume of 5000 m³ on the basis of operating conditions including a coke ratio of 390 kg/t and a pulverized coal ratio of 100 kg/t, which are ordinary operating conditions using no carbon iron composite as a charged material. The carbon iron composite was produced as described below. To a mixture of iron ore and coal (a mass ratio of 0.4:0.6), 5% by mass of a mixture of asphalt pitch and soft pitch serving as binders was added. After being agitated and mixed in a mixer, the mixtures were pressed with a linear load of 5 t/cm, whereby 6 cc of briquettes were produced. The iron ore used was pellet feed with a particle size of 100 microns or less (-100 µm). The coal used had an average maximum reflectivity of 1.0%. The coal used was pulverized into particles with a size of 3 mm or less (-3 mm). The coal was carbonized by heating the briquettes a shaft furnace which was a dedicated carbonization furnace, whereby the carbon iron composite was produced. The carbon iron composite and an iron source were mixed together, the mixture and lump coke were alternately charged into the blast furnace, and the blast furnace was operated.

Table 2 shows the above-mentioned base conditions, conditions for using the carbon iron composite, test conditions, and operation results of the blast furnace.

**Table 2**

| | | Base | Case 1 | Case 2 | Case 3 | Case 4 | Case 5 | Case 6 | Case 7 | Case 8 | Case 9 | Case 10 |
|---|---|---|---|---|---|---|---|---|---|---|---|---|
| Coke ratio | kg/t | 390 | 320 | 320 | 320 | 320 | 320 | 320 | 320 | 320 | 320 | 320 |
| Carbon iron composite ratio | kg/t | 0 | 50 | 50 | 50 | 50 | 50 | 50 | 50 | 50 | 50 | 50 |
| Pulverized coal ratio | kg/t | 100 | 100 | 100 | 100 | 100 | 100 | 100 | 100 | 100 | 100 | 100 |
| Reducing agent ratio | kg/t | 490 | 470 | 470 | 470 | 470 | 470 | 470 | 470 | 470 | 470 | 470 |
| Amount of shaft gas | Nm³/t | 0 | 0 | 65 | 65 | 65 | 32.5 | 65 | 97.5 | 97.5 | 97.5 | 97.5 |
| Temperature of shaft gas | °C | - | - | 200 | 600 | 1000 | 600 | 600 | 600 | 1000 | 1000 | 1000 |
| Dimensionless vertical position | - | - | - | 0.8 | 0.8 | 0.8 | 0.6 | 0.6 | 0.6 | 0.4 | 0.6 | 0.8 |
| Temperature of top gas | °C | 125.4 | 99.2 | 108.5 | 121.1 | 139.6 | 112.9 | 121.1 | 131 | 153.2 | 157.9 | 166 |

Case 1 is one in which blast conditions and the injection rate of pulverized coal are the same as the base conditions and the carbon iron composite is used instead of coke. In this case, the temperature of the top gas was decreased to 99.2°C, dust emissions were reduced, the fluctuation of gas permeability was caused thereby, and the stable operation of the blast furnace was inhibited. In Cases 2 to 10, the carbon iron composite was used and the shaft gas was injected into the shaft portion for the purpose of restoring the temperature of the top gas.

In Cases 2 to 4, the injection rate of the shaft gas was fixed to 65 Nm³/t within the range of 20 Nm³/t to 200 Nm³/t and the injection temperature of the shaft gas was 200°C, 600°C, or 1000°C. The term "dimensionless vertical position" in this table refers to the vertical injection position of the shaft gas. With reference to Fig. 1, h0 (m) represents the length of the shaft portion of the blast furnace. The ratio of the injection height h (m) of the shaft gas to the length h0 (m) of the shaft portion of the blast furnace is used to express the dimensionless vertical position. In Cases 2 to 4, the dimensionless vertical position is 0.8.

In Cases 5 to 7, the injection temperature of the shaft gas was 600°C; the vertical injection position thereof was 0.6 in terms of dimensionless vertical position; and the injection rate of the shaft gas was 32.5 Nm³/t, 65 Nm³/t, or 97.5 Nm³/t. In Cases 8 to 10, the injection temperature of the shaft gas was 1000°C; the injection rate of the shaft gas was 97.5 Nm³/t; and the vertical injection position of the shaft gas was 0.4, 0.6, or 0.8 in terms of dimensionless vertical position.

In each of Cases 2 to 10, it was able to confirm the restoring of the temperature of the top gas and it was able to keep stable furnace condition in a low-reducing agent ratio operation, unlike Case 1. Since the degree of restoring the temperature of the top gas depends on operational factors such as the injection rate, vertical injection position, and injection temperature of the shaft gas, the degree of restoring the temperature thereof can be adjusted to the minimum extent.

After Cases 1 to 10 were tested, the blast furnace was actually operated in such a manner that the coke ratio was increased, the carbon iron composite ratio was increased, and the reducing agent ratio was reduced. Conditions for using carbon iron composite in Cases 11 to 20, test conditions, and operation results of the blast furnace are as described below.

**Table 3**

| | | Base | Case 11 | Case 12 | Case 13 | Case 14 | Case 15 | Case 16 | Case 17 | Case 18 | Case 19 | Case 20 |
|---|---|---|---|---|---|---|---|---|---|---|---|---|
| Coke ratio | kg/t | 390 | 250 | 250 | 250 | 250 | 250 | 222 | 222 | 222 | 222 | 222 |
| Carbon iron composite ratio | kg/t | 0 | 100 | 100 | 100 | 100 | 100 | 120 | 120 | 120 | 120 | 120 |
| Pulverized coal ratio | kg/t | 100 | 100 | 100 | 100 | 100 | 100 | 100 | 100 | 100 | 100 | 100 |
| Reducing agent ratio | kg/t | 490 | 450 | 450 | 450 | 450 | 450 | 442 | 442 | 442 | 442 | 442 |
| Amount of shaft gas | Nm³/t | 0 | 0 | 97.5 | 130 | 65 | 65 | 0 | 130 | 65 | 97.5 | 130 |
| Temperature of shaft gas | °C | - | - | 600 | 600 | 1000 | 1000 | - | 600 | 1000 | 1000 | 1000 |
| Dimensionless vertical position | - | - | - | 0.4 | 0.8 | 0.4 | 0.6 | - | 0.6 | 0.8 | 0.4 - | 0.6 |
| Temperature of top gas | °C | 125.4 | 73.0 | 107.3 | 116.8 | 109.0 | 113.4 | 62.5 | 103.9 | 108.7 | 116.5 | 137.2 |

Cases 11 to 15 are those in which blast conditions and the injection rate of pulverized coal were the same as the base conditions and the carbon iron composite used instead of coke was increased to 100 kg/t. In Cases 11 to 15, the coke ratio was 250 kg/t, the carbon iron composite ratio was 100 kg/t, and the pulverized coal ratio was 100 kg/t, which resulted in that the reducing agent ratio was 450 kg/t. In Case 11, the temperature of the top gas was decreased to 73.0°C, dust emissions were reduced, the fluctuation of gas permeability was caused thereby, and the stable operation of the blast furnace was inhibited when no shaft gas was injected. On the other hand, in Cases 12 and 13, the injection temperature of the shaft gas was 600°C; the injection rate of the shaft gas was 97.5 Nm³/t and 130 Nm³/t, respectively; and the vertical injection position of the shaft gas was 0.4 and 0.8, respectively, in terms of dimensionless vertical position. In Cases 14 and 15, the injection temperature of the shaft gas was 1000°C; the injection rate of the shaft gas was 65 Nm³/t; and the vertical injection position of the shaft gas was 0.4 and 0.6, respectively, in terms of dimensionless vertical position. This resulted in that the temperature of the top gas was 107.3°C, 116.8°C, 109.0°C, or 113.4°C, that is, 100°C or higher; hence, failures arising in Case 11 were resolved. Cases 16 to 20 are those in which the carbon iron composite used instead of coke was increased to 120 kg/t. In Cases 16 to 20, the coke ratio was 222 kg/t, the carbon iron composite ratio was 120 kg/t, and the pulverized coal ratio was 100 kg/t, which resulted in that the reducing agent ratio was 442 kg/t. In Case 16, no shaft gas was injected, the temperature of the top gas was decreased to 62.5°C, dust emissions were reduced, the fluctuation of gas permeability was caused thereby, and the stable operation of the blast furnace was inhibited. On the other hand, in Case 17, the injection temperature of the shaft gas was 600°C, the injection rate of the shaft gas was 130 Nm³/t, and the vertical injection position of the shaft gas was 0.6 in terms of dimensionless vertical position. In Cases 18 to 20, the injection temperature of the shaft gas was 1000°C; the injection rate of the shaft gas was 65 Nm³/t, 97.5 Nm³/t, or 130 Nm³/t; and the vertical injection position of the shaft gas was 0.8, 0.4, or 0.6 in terms of dimensionless vertical position. This resulted in that the temperature of the top gas was 103.9°C, 116.8°C, 108.7°C, 116.5°C, or 137.2°C, that is, the temperature of the top gas was 100°C or higher; hence, failures arising in Case 16 were resolved.

In each of Cases 12 to 15 and 17 to 20, in which the shaft gas was injected, it was able to confirm the restoring of the temperature of the top gas by more than 100°C and it was able to keep stable furnace condition in a low-reducing agent ratio operation, unlike Case 11 and 16, in which no shaft gas was injected. Since the degree of restoring the temperature of the top gas depends on operational factors such as the injection rate, vertical injection position, and injection temperature of the shaft gas, the degree of restoring the temperature thereof can be adjusted to the minimum extent as described for Cases 2 to 10.

The shaft gas injected from the shaft portion preferably has a temperature not lower than the temperature of the injection position thereof. This is because when the temperature of the shaft gas is lower than the temperature of the injection position thereof, the inside of the blast furnace may possibly be cooled.

In the case of using a portion of the top gas of the blast furnace as the shaft gas, the maximum effect can be achieved with the top gas circulated at a smaller rate in such a manner that operational factors such as the injection rate, vertical injection position, and injection temperature of the shaft gas are adjusted depending on the required degree of restoring the temperature of the top gas, because the top gas of the blast furnace is effectively used as an energy source in ironworks. This leads to energy saving.

In the blast furnace-operating method according to this embodiment, the decrease in temperature of the top gas is suppressed in such a manner that one, two, or three of the injection temperature, injection rate, and vertical injection position of the shaft gas are controlled in combination depending on the temperature of the top gas during the operation of the blast furnace using carbon iron composite as a portion of the charged material. Therefore, a failure to heat a furnace top portion can be avoided at low cost without significant capital investment even in the case of performing a low-RAR operation (the reduction of carbon dioxide emissions).

Since the vertical injection position of the shaft gas is adjusted to a position at which the inside temperature of the blast furnace is lower than the temperature of the shaft gas depending on the temperature of the shaft gas injected from the shaft portion, the inside of the blast furnace is not cooled by the shaft gas.

The use of a combustion flue gas free of O₂ as the shaft gas does not inhibit the reducing action of the inside of the blast furnace.

Furthermore, the use of a combustion flue gas containing one or both of CO and CO₂ as the shaft gas does not inhibit the reducing action of the inside of the blast furnace. Therefore, various combustion flue gases including blast furnace gases and the sensible heat thereof can be used.

The use of a blast furnace gas as the shaft gas allows the atmosphere in the blast furnace to be ensured.

In the present invention, the temperature of the top gas is suitable for operating the blast furnace by the method according to the present invention in such a manner that the temperature of the furnace top is maintained at 80°C or higher. This allows a failure to heat a furnace top portion to be avoided even though performing a low-RAR operation (the reduction of carbon dioxide emissions). As long as the blast furnace is operated in such a manner that the temperature of the furnace top is maintained at 80°C or higher, the condensation of moisture in a flue gas can be avoided. The temperature of the furnace top is preferably maintained at 100°C or higher because the condensation of moisture can be avoided and the temperature thereof is desirably 110°C or higher, which is higher than 100°C. The upper limit thereof is 300°C or lower depending on an intended low-RAR operation and is preferably 200°C or lower.

The term "low-RAR operation (the reduction of carbon dioxide emissions)" herein refers to a low-RAR operation in which carbon iron composite is used instead of coke and the coke ratio (reducing agent ratio) is 470 kg/t or less. Reference Signs List
- 1: blast furnace
- 2: tuyeres
- 3: shaft gas injection pipes
- 4: shaft gas
- 5: ore (raw material)
- 6: coke
- 19: flow

## Claims

1. A method for operating a blast furnace (1), comprising:
using carbon iron composite as a charging material of the blast furnace, produced by briquetting and carbonizing a material containing 70% by mass or more of coal and iron ore;
injecting gas into the blast furnace from a shaft portion of the blast furnace; and
controlling at least one selected from the group consisting of injection temperature, injection rate, and vertical injection position of the gas depending on a top gas temperature of the blast furnace.

2. The method according to claim 1, wherein
the charging material includes iron ore (5), coke (6), and the carbon iron composite, and
the carbon iron composite is 2% to 60% by mass of the total coke amount that is the sum of coke and the carbon iron composite.

3. The method according to claim 1, wherein
the carbon iron composite is 10% to 35% by mass of the total coke amount that is the sum of coke and the carbon iron composite.

4. The method according to claim 1, wherein
the controlling of at least one comprises controlling at least one selected from the group consisting of the injection temperature, injection rate, and vertical injection position of the gas injected from the shaft portion of the blast furnace to maintain the top gas temperature at more than 80°C.

5. The method according to claim 1, wherein
the injecting of the gas comprises injecting the gas into the blast furnace through a shaft gas injection pipe attached to the shaft portion at a tip gas velocity of 6 m/s to 100 m/s, preferably 10 m/s to 72 m/s, more preferably 15 m/s to 72 m/s.

6. The method according to claim 1, wherein the injection temperature of the gas is 200°C to 1000°C.

7. The method according to claim 1, wherein the injection rate of the gas is 20 Nm³/t to 200 Nm³/t.

8. The method according to claim 1, wherein
the controlling of at least one comprises controlling the vertical injection position of the gas such that the vertical injection position of the gas is adjusted to a position at which the inside temperature of the blast furnace is lower than the temperature of the gas.

9. The method according to claim 1, wherein
the injecting of the gas comprises injecting the gas into the blast furnace from the shaft portion horizontally or at an angle of up to 45° downward, preferably 15° to 45° downward.

10. The method according to claim 1, wherein
the injecting of the gas comprises injecting the gas into the blast furnace at a position of 7 m or more below the surface of the charged material.

11. The method according to Claim 1, wherein
the injecting of the gas comprises injecting the gas into the blast furnace through four or more ports circumferentially arranged around the blast furnace.

12. The method according to claim 1, wherein the gas is a combustion flue gas free of O₂.

13. The method according to claim 1, wherein the gas is a combustion flue gas containing one or both of CO and CO₂.

14. The method according to claim 1, wherein the gas is a blast furnace gas.

## Patentansprüche

1. Verfahren zum Betreiben eines Hochofens (1), mit:
Verwenden von Kohlenstoff-Eisen-Verbundmaterial als ein Beschickungsmaterial des Hochofens, hergestellt durch Brikettieren und Karbonisieren eines Materials, dass 70 Massen-% oder mehr Kohle und Eisenerz enthält;
Einblasen von Gas in den Hochofen von einem Schaftabschnitt des Hochofens; und
Steuern von mindestens einem, ausgewählt aus der Gruppe bestehend aus Einblastemperatur, Einblasrate und vertikaler Einblasposition des Gases in Abhängigkeit von einer Gichtgastemperatur des Hochofens.

2. Verfahren nach Anspruch 1, wobei
das Beschickungsmaterial Eisenerz (5), Koks (6) und das Kohlenstoff-Eisen-Verbundmaterial aufweist und
das Kohlenstoff-Eisen-Verbundmaterial 2 bis 60 Massen-% der Gesamtkoksmenge beträgt, welche die Summe aus Koks und dem Kohlenstoff-Eisen-Verbundmaterial ist.

3. Verfahren nach Anspruch 1, wobei
das Kohlenstoff-Eisen-Verbundmaterial 10 bis 35 Masse-% der Gesamtkoksmenge beträgt, welche die Summe aus Koks und dem Kohlenstoff-Eisen-Verbundmaterial ist.

4. Verfahren nach Anspruch 1, wobei
das Steuern von zumindestens einem Steuern von zumindestens einem ausgewählt aus der Gruppe bestehend aus der Einblastemperatur, der Einblasrate und der vertikalen Einblasposition des von dem Schaftabschnitt des Hochofens eingeblasenen Gases aufweist, um die Gichtgastemperatur auf mehr als 80°C zu halten.

5. Verfahren nach Anspruch 1, wobei
das Einblasen des Gases Einblasen des Gases in den Hochofen durch ein an dem Schaftabschnitt angebrachtes Schaftgaseinblasrohr mit einer Spitzengasgeschwindigkeit von 6 m/s bis 100 m/s, bevorzugt 10 m/s bis 72 m/s, ferner bevorzugt 15 m/s bis 72 m/s aufweist.

6. Verfahren nach Anspruch 1, wobei
die Einblastemperatur des Gases 200°C bis 1000°C beträgt.

7. Verfahren nach Anspruch 1, wobei
die Einblasrate des Gases 20 Nm³/t bis 200 Nm³/t beträgt.

8. Verfahren nach Anspruch 1, wobei
das Steuern von mindestens einem Steuern der vertikalen Einblasposition des Gases derart, dass die vertikale Einblasposition des Gases auf eine Position eingestellt wird, bei der die Innentemperatur des Hochofens niedriger ist als die Temperatur des Gases aufweist.

9. Verfahren nach Anspruch 1, wobei
das Einblasen des Gases Einblasen des Gases in den Hochofen von dem Schaftabschnitt horizontal oder in einem Winkel von bis zu 45° nach unten hin, bevorzugt 15° bis 45° nach unten hin aufweist.

10. Verfahren nach Anspruch 1, wobei
das Einblasen des Gases Einblasen des Gases in den Hochofen an einer Position von 7 m oder mehr unterhalb der Oberfläche des Beschickungsmaterials aufweist.

11. Verfahren nach Anspruch 1, wobei
das Einblasen des Gases Einblasen des Gases in den Hochofen durch vier oder mehr um den Hochofen herum angeordnete Öffnungen aufweist.

12. Verfahren nach Anspruch 1, wobei
das Gas ein Verbrennungsgas ist, das frei von O₂ ist.

13. Verfahren nach Anspruch 1, wobei
das Gas ein Verbrennungsgas ist, das CO und/oder CO₂ enthält.

14. Verfahren nach Anspruch 1, wobei
das Gas ein Hochofengas ist.

## Revendications

1. Procédé de fonctionnement d'un haut-fourneau (1), comprenant :
une utilisation d'un composite carbone-fer à titre de matériau de charge du haut-fourneau, produit par briquetage et carbonisation d'un matériau contenant 70% en poids ou plus de charbon et de minerai de fer ;
une injection de gaz dans le haut-fourneau à partir d'une portion d'arbre du haut-fourneau ; et
une commande d'au moins un sélectionné à partir du groupe constitué par une température d'injection, un débit d'injection, et une position d'injection verticale du gaz en fonction d'une température de gaz supérieure du haut-fourneau.

2. Procédé selon la revendication 1, dans lequel
le matériau de charge inclut un minerai de fer (5), de la coke (6), et le composite carbone-fer, et
le composite carbone-fer représente 2 % à 60 % en poids de la quantité totale de coke qui est la somme du coke et du composite carbone-fer.

3. Procédé selon la revendication 1, dans lequel
le composite carbone-fer représente 10 % à 35 % en poids de la quantité totale de coke qui est la somme de coke et du composite carbone-fer.

4. Procédé selon la revendication 1, dans lequel
la commande d'au moins un comprend une commande d'au moins un sélectionné à partir du groupe constitué par la température d'injection, le débit d'injection, et la position d'injection verticale du gaz injecté à partir de la portion d'arbre du haut-fourneau pour maintenir la température de gaz supérieure à plus de 80 °C.

5. Procédé selon la revendication 1, dans lequel
l'injection du gaz comprend une injection du gaz dans le haut-fourneau à travers un tuyau d'injection de gaz d'arbre fixé à la portion d'arbre à une vitesse de gaz d'extrémité de 6 m/s à 100 m/s, de préférence de 10 m/s à 72 m/s, de manière davantage préférée de 15 m/s à 72 m/s.

6. Procédé selon la revendication 1, dans lequel la température d'injection du gaz est 200 °C à 1000 °C.

7. Procédé selon la revendication 1, dans lequel le débit d'injection du gaz est 20 Nm³/t à 200 Nm³/t.

8. Procédé selon la revendication 1, dans lequel
la commande d'au moins un comprend une commande de la position d'injection verticale du gaz de sorte que la position d'injection verticale du gaz soit ajustée à une position à laquelle la température intérieure du haut-fourneau est inférieure à la température du gaz.

9. Procédé selon la revendication 1, dans lequel
l'injection du gaz comprend une injection du gaz dans le haut-fourneau à partir de la portion d'arbre horizontalement ou à un angle de plus de 45° vers le bas, de préférence de 15° à 45° vers le bas.

10. Procédé selon la revendication 1, dans lequel
l'injection du gaz comprend une injection du gaz dans le haut-fourneau à une position de 7 m ou plus au-dessous de la surface du matériau de charge.

11. Procédé selon la revendication 1, dans lequel
l'injection du gaz comprend une injection du gaz dans le haut-fourneau à travers quatre orifices ou plus agencés circonférentiellement autour du haut-fourneau.

12. Procédé selon la revendication 1, dans lequel le gaz est un gaz de fumée de combustion dépourvu d'O₂.

13. Procédé selon la revendication 1, dans lequel le gaz est un gaz de fumée de combustion contenant un parmi CO et CO₂, ou les deux.

14. Procédé selon la revendication 1, dans lequel le gaz est un gaz de haut-fourneau.
